# EUROPEAN PATENT APPLICATION

(11) **EP 3 656 894 A1**
(43) Date of publication of application: **27.05.2020**
(21) Application number: 18208193.5
(22) Date of filing: 25.11.2018
(51) Int. Cl.: C25D 5/54, C09D 11/52, B05D 1/02

(54) **METHOD FOR ELECTROPLATING COPPER ON NON-METALLIC SURFACES USING GRAPHENE-BASED INK**

(71) Applicant: Nanjing Graphene Research Institute Corporation, 210038 Nanjing City Jiangsu Province (CN)
(72) Inventor: KU, Kuanlin, 324 Taoyuan City (TW); CHANG, KUO-HSIN, 622 DALIN TOWNSHIP (TW); LAI, CHUNG- PING, 302 ZHUBEI CITY (TW)
(74) Representative: Cabinet Chaillot

(57) **Abstract**

A method for forming electroplated copper on a surface of non-metal materials by graphene-based plating ink is revealed. A graphene-based plating ink is prepared by modified functionalized graphene and then sprayed on a surface of a non-metal material. Next dry the graphene-based plating ink sprayed on the non-metal material. A layer of electroplated copper is formed on a surface of the graphene-based plating ink by plating. The method uses graphene-based plating ink as a conductor of the electroplated copper and increases adhesion between functionalized graphene contained in the graphene-based plating ink and the non-metal material by modification. During plating, no heavy metal is used as catalyst so that the method is environmentally friendly and cost-saving. The graphene-based plating ink with excellent adhesion and higher flexibility can be attached to the surface of the non-metal material firmly and used as an adhesive between electroplated copper and the non-metal material.

## Description

### BACKGROUND OF THE INVENTION

### Field of the Invention

The present invention relates to electroplated copper, especially to a method for forming electroplated copper on a surface of a non-metal material by graphene-based plating ink.

A process of electroplating non-metals has been used widely in industries due to features of the surface being plated such as corrosion resistance, toughness, abrasion resistance, aesthetics, etc. The techniques of electroplating non-metal materials have been applied to various products and industries such as vehicles, consumer products, pipelines, toys, food, beverages and cosmetics.

Routine electroplating operations generally includes two steps: pretreatment of the surface and metal electroplating. The pretreatment of the surface involves some processes of chemical treatment and reactions such as cleaning, etching, sensitization, activation and acceleration. A mixture having a strong oxidant such as chromium trioxide mixed with sulfuric acid leads to significant surface roughness that provides good mechanical adhesion and micro-pores used as adhesion sites between the metals and the substrate.

The pretreatment of the non-metal surface available now is carried out by a mixture of chromium trioxide, sulfuric acid and water or a mixture of these inorganic components with phosphoric acid. However, this method has many shortcomings. Hexavalent chromium compounds contained in the pretreatment solution are genotoxic carcinogens extremely dangerous for human health. Workers exposed to hexavalent chromium compounds are at increased risk of developing lung cancer, asthma, or damage to the nasal epithelia and skin. The use of hexavalent chromium leads to long-term environmental contamination. Within America, European and China, the use of hexavalent chromium in electronics industry is largely prohibited. During neutralization, a large amount of chromium (III) hydroxide is generated and this impedes the removal of the composition used. Furthermore, the pretreatment solution used is highly corrosive so that a lot of water is required for removing the pretreatment solution from the surface of the non-metal surface completely. The routine surface pretreatment before electroplating is complicated and time-consuming. The following processing of the pretreatment solution is associated with the composition used. Thus the amount of the hexavalent chromium compounds should be reduced and reduction products should be neutralized for better handling of the used pretreatment solution.

### SUMMARY OF THE INVENTION

Therefore it is a primary object of the present invention to provide a method for forming electroplated copper on a surface of non-metal materials by graphene-based plating ink that solves the problems mentioned above.

In order to achieve the above object, a method for forming electroplated copper on a surface of non-metal materials by graphene-based plating ink according to the present invention includes the following steps: preparing a graphene-based plating ink; spraying the graphene-based plating ink on a surface of a non-metal material; drying the graphene-based plating ink sprayed on the surface of the non-metal material at a temperature between 50°C and 200°C for 5-30 minutes; and immersing the non-metal material with the graphene-based plating ink on the surface thereof in a plating solution and applying a voltage or current to form electroplated copper on the graphene-based plating ink.

Preferably, the non-metal materials include plastic, ceramic, wood, glass and fabric.

Preferably, the graphene-based plating ink is a mixture of functionalized graphene, dispersants, thickeners and solvents. A surface of the functionalized graphene includes oxygen groups. The amount of oxygen in the functionalized graphene that contains oxygen groups is 5-50wt%.

Preferably, the surface of the functionalized graphene includes one of the following functional groups-an amino group, a carboxyl group, a hydroxyl group, a double bond, a triple bond, and a haloalkane.

Preferably, the method further includes a modifying step in which the functionalized graphene is modified through binders, crosslinkers, monomers, oligomers or polymers.

Preferably, the binders, the crosslinkers, the monomers, the oligomers and the polymers include at least one of the following functional group selected from the group consisting of an amino group, a carboxyl group, a hydroxyl group, a double bond, a triple bond, and a haloalkane.

Preferably, the mixture of the graphene-based plating ink further includes a crosslinker and an initiator.

Preferably, the functionalized graphene is further doped with nitrogen (N), sulfur (S), boron (B), fluorine (F), phosphorous (P) or their combinations.

Preferably, the amount of the above elements or their combinations contained in the functionalized graphene is 1-20 wt%.

Preferably, the mixture of the graphene-based plating ink further includes adhesives made from polymers, resins or binders. The amount of the adhesive contained in the graphene-based plating ink is 0.1-30wt%.

The method for forming electroplated copper on a surface of non-metal materials by graphene-based plating ink according to the present invention has benefits such as an alternative is provided for the heavy metal catalysts used in the copper plating on the surface of the non-metal materials now so that no hexavalent chromium (chromium (VI)) and palladium are required. The present method also has the advantages of environmental protection, low cost and time saving.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a cross-sectional view of electroplated copper produced by an embodiment of a method for forming electroplated copper on a surface of non-metal materials by graphene-based plating ink according to the present invention;

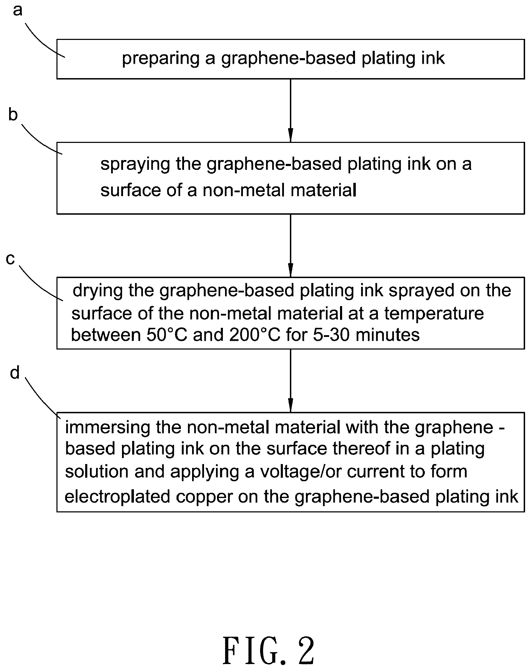

Fig. 2 is a flow chart showing steps of an embodiment of a method for forming electroplated copper on a surface of non-metal materials by graphene-based plating ink according to the present invention;
Fig. 3-1 and Fig. 3-2 are schematic drawings showing structure of electroplated copper produced by an embodiment of a method for forming electroplated copper on a surface of non-metal materials by graphene-based plating ink according to the present invention;
Fig. 4-1 and Fig. 4-2 are schematic drawings showing cross sections of microstructure of electroplated copper produced by an embodiment of a method for forming electroplated copper on a surface of non-metal materials by graphene-based plating ink before stretch and after stretch respectively according to the present invention; and
Fig. 5 is a photograph showing the non-metal material used is plastic and the graphene-based plating ink is applied to the surface of the non-metal material, as shown in the appendix in (A) and the electroplated copper is formed on the graphene-based plating ink after a voltage or a current being applied, as shown in the appendix in (B).

### DETAILED DESCRIPTION OF THE PREFERRED EMBODIMENT

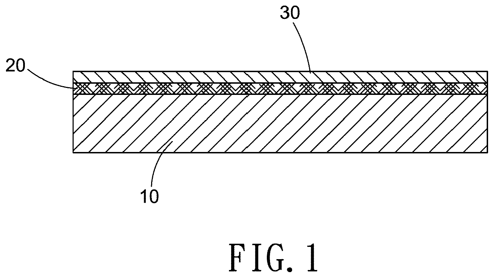

Refer to Fig. 1, a sectional view showing structure of a product manufactured by a method using graphene-based plating ink to form electroplated copper on surface of non-metal material is revealed.

As shown in Fig. 1, electroplated copper formed on the surface of non-metal material according to the present invention includes a non-metal material 10, a graphene-based plating ink 20 attached on the surface of the non-metal material 10, and electroplated copper 30 formed on the graphene-based plating ink 20 by a plating process.

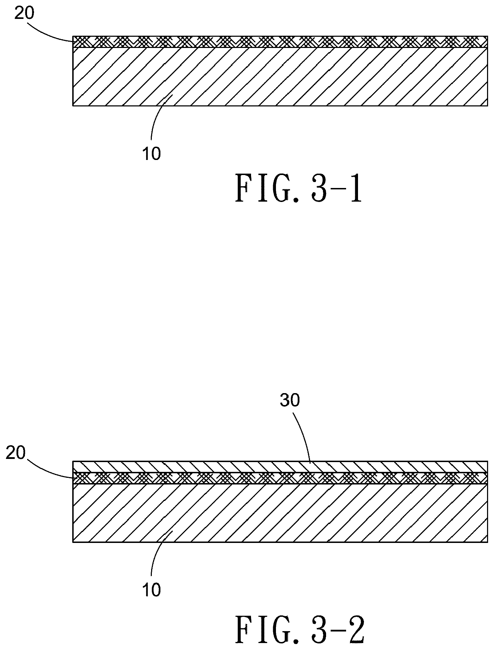

A method for forming electroplated copper on surfaces of non-metal materials by graphene-based plating ink includes the following steps.
a. preparing a graphene-based plating ink 20;
b. spraying the graphene-based plating ink 20 on a surface of a non-metal material 10 (as shown in Fig. 3-1);
c. drying the graphene-based plating ink 20 sprayed on the surface of the non-metal material 10 at a temperature between 50°C and 200°C for 5-30 minutes; and
d. immersing the non-metal material 10 with the graphene-based plating ink 20 on the surface thereof in a plating solution and applying a voltage or current to form electroplated copper 30 on the graphene-based plating ink 20 (as shown in Fig. 3-2).

In a preferred embodiment, the method further includes a step of modifying functionalized graphene 40 contained in the graphene-based plating ink 20. In the modifying step, the functionalized graphene 40 contained in the graphene-based plating ink 20 is modified through binders 41, crosslinkers 41, monomers, oligomers or polymers. The adhesion between the functionalized graphene 40 contained in the graphene-based plating ink 20 and the non-metal material 10 is increased by the above modifying step. The binders 41, the crosslinkers 41, the monomers, the oligomers and the polymers include at least one of the following functional group selected from the group consisting of an amino group, a carboxyl group, a hydroxyl group, a double bond, a triple bond, and a haloalkane for increasing the adhesion between the functionalized graphene 40 contained in the graphene-based plating ink 20 and the non-metal material 10.

The non-metal material 10 can be plastic, ceramic, wood, glass or fabric.

In a preferred embodiment, the graphene-based plating ink 20 is a mixture of functionalized graphene 40, dispersants, thickeners and solvents. A surface of the functionalized graphene 40 includes oxygen groups. The amount of oxygen in the functionalized graphene 40 that contains oxygen groups is 5-50wt%. In other embodiments, the surface of the functionalized graphene 40 includes one of the following functional groups-an amino group, a carboxyl group, a hydroxyl group, a double bond, a triple bond, and a haloalkane.

In a preferred embodiment of the graphene-based plating ink 20, the amount of the functionalized graphene 40 in the mixture is 0.5-30wt%. The amount of the dispersants in the mixture is 0.05-20wt% and the dispersants can be ionic or non-ionic. The solvents can be organic solvents, inorganic solvents or aqueous solvents. The amount of the solvents in the mixture is 30-90 wt%. The amount of the thickeners in the mixture is 0.01-10wt% and the thickeners are used to produce the functionalized graphene-based ink 20 with high viscosity.

In a preferred embodiment, the graphene-based plating ink 20 further includes at least one crosslinker 41 and at least one initiator.

In another preferred embodiment, the graphene-based plating ink 20 further includes adhesives that are made from polymers, resins or binders 41. The amount of the adhesive in the graphene-based plating ink 20 is 0.1-30 wt%.

The functionalized graphene 40 is further doped with nitrogen (N), sulfur (S), boron (B), fluorine (F), phosphorous (P) or their combinations. The amount of the elements or their combinations contained in the functionalized graphene 40 is 1-20 wt%.

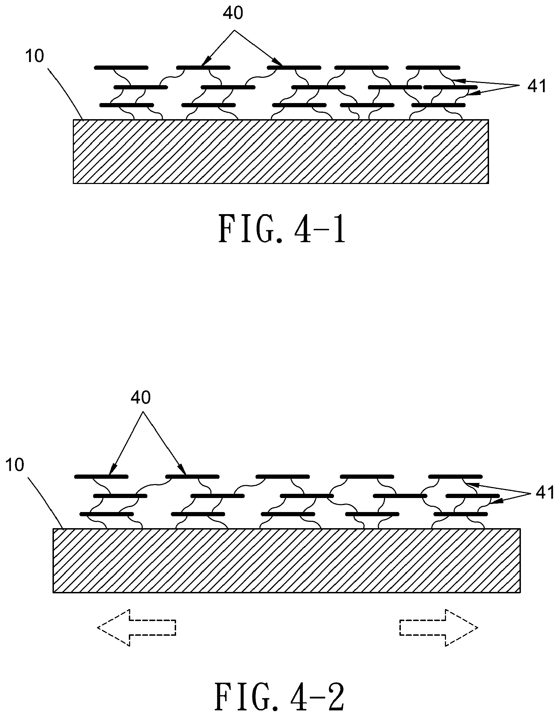

Refer to Fig. 4-1 and Fig. 4-2, a multiple-layer structure is formed by the functionalized graphene 40 in the graphene-based plating ink 20 shown in Fig. 4-1. The multiple-layer structure formed by the functionalized graphene 40 will not be broken before stretch and after stretch owing to the binder 41 and/or the crosslinker 41 between the functionalized graphene 40. The functionalized graphene 40 in the graphene-based plating ink 20 is firmly attached to the surface of the non-metal material 10 and used as the adhesive between the electroplated copper 30 and the non-metal material 10.

### Embodiment 1:

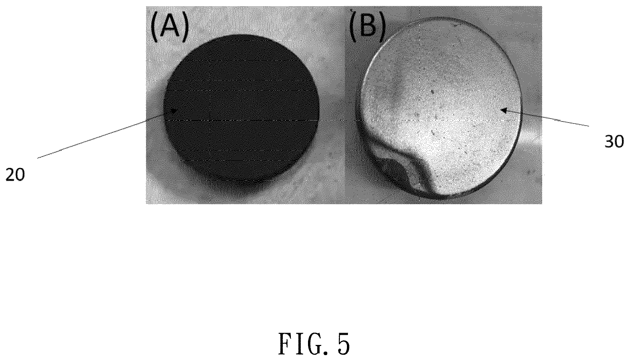

Refer to the appendix 1, an embodiment is revealed. The non-metal material 10 used is plastic and the graphene-based plating ink 20 is applied to the surface of the non-metal material 10, as shown in the appendix (A) in Figure 5. Then the non-metal material 10 with the graphene-based plating ink 20 is dried in the oven at 100°C for 20 minutes. After drying, the non-metal material 10 with the graphene-based plating ink 20 is placed into the plating solution for 30-120 minutes. Then electroplated copper 30 is formed on the graphene-based plating ink 20 after a voltage or a current being applied, as shown in the appendix (B) in Figure 5.

In summary, the method of the present invention provides an alternative for the heavy metal catalysts used in the copper plating on the surface of the non-metal materials now. No hexavalent chromium (chromium(VI)) and palladium are needed. Thus the present method has the advantages of environmental protection, low cost and time saving. Moreover, the adhesion between the functionalized graphene 40 contained in the graphene-based plating ink 20 and the non-metal material 10 is enhanced by the above modifying step.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A method for forming electroplated copper on a surface of non-metal materials by graphene-based plating ink comprising the steps of:
preparing a graphene-based plating ink (20);
spraying the graphene-based plating ink (20) on a surface of a non-metal material (10);
drying the graphene-based plating ink (20) sprayed on the surface of the non-metal material (10) at a temperature between 50°C and 200°C for 5-30 minutes; and
immersing the non-metal material (10) with the graphene-based plating ink (20) on the surface thereof in a plating solution and applying a voltage or current to form electroplated copper (30) on the graphene-based plating ink (20).

2. The method as claimed in claim 1, wherein the non-metal material (10) is selected from the group consisting of plastic, ceramic, wood, glass and fabric.

3. The method as claimed in claim 1, wherein the graphene-based plating ink (20) is a mixture of functionalized graphene (40), at least one dispersant, at least one thickener and at least one solvent.

4. The method as claimed in claim 3, wherein a surface of the functionalized graphene (40) includes at least one oxygen group and the amount of oxygen in the functionalized graphene (40) that contains the oxygen groups is 5-50wt%.

5. The method as claimed in claim 3, wherein a surface of the functionalized graphene (40) includes a functional group selected from the group consisting of an amino group, a carboxyl group, a hydroxyl group, a double bond, a triple bond, and a haloalkane.

6. The method as claimed in claim 3, wherein the method further includes a step of modifying the functionalized graphene (40) through substances selected from the group consisting of binders (41), crosslinkers (41), monomers, oligomers and polymers.

7. The method as claimed in claim 6, wherein the binders (41), the crosslinkers (41), the monomers, the oligomers and the polymers include at least one of the functional group selected from the group consisting of an amino group, a carboxyl group, a hydroxyl group, a double bond, a triple bond, and a haloalkane.

8. The method as claimed in claim 3, wherein the mixture of the graphene-based plating ink (20) further includes at least one crosslinker (41) and at least one initiator.

9. The method as claimed in claim 3, wherein the functionalized graphene (40) is further doped with a substance selected from the group consisting of nitrogen (N), sulfur (S), boron (B), fluorine (F), phosphorous (P) and a combination thereof.

10. The method as claimed in claim 9, wherein the amount of the substance contained in the functionalized graphene (40) is 1-20 wt%.

11. The method as claimed in claim 1, wherein the graphene-based plating ink (20) further includes adhesives made from materials selected from the group consisting of polymers, resins and binders (41); the amount of the adhesive contained in the graphene-based plating ink 20 is 0.1-30wt%.
